# EUROPÄISCHE PATENTANMELDUNG

(11) **EP 4 541 552 A1**
(43) Veröffentlichungstag der Anmeldung: **23.04.2025**
(21) Anmeldenummer: 23204175.6
(22) Anmeldetag: 17.10.2023
(51) Int. Cl.: B29C 53/02, B29L 31/56

(54) **VORRICHTUNG UND VERFAHREN ZUM FALTEN EINES RANDBEREICHS EINER VERSCHLUSSKAPPE FÜR EINEN BEHÄLTER**

(71) Anmelder: PackSys Global AG, 8630 Rüti (CH); Origin Materials Operating, Inc., West Sacramento, CA 95605 (US)
(72) Erfinder: Hanan, Jay Clarke, Glendora, CA 91740 (US); Hess, Rachel Egan, Bethesda, MB 20814 (US); Schaad, Pascal, 2544 Bettlach (CH); Flükiger, Paul, 627 Heimberg (CH); Läubli, Julius, 8645 Jona (CH)
(74) Vertreter: Keller Schneider Patent- und Markenanwälte AG

(57) **Zusammenfassung**

Eine Vorrichtung zum Falten eines Randbereichs (72) entlang einer Umfangrichtung eines Mantels einer Verschlusskappe (70) für einen Behälter, zur Ausbildung eines Sicherungsrings an der Verschlusskappe (70), umfasst eine erste Transporteinrichtung zum Transportieren der Verschlusskappe (70) entlang eines Transportweges, welcher eine Bearbeitungsstrecke umfasst, wobei die erste Transporteinrichtung einen um eine Drehachse rotierbaren Mitnehmer (60) zur Aufnahme einer Verschlusskappe (70) umfasst. Entlang der Bearbeitungsstrecke ist eine stationäre Faltschiene (50) mit einem sich entlang der Bearbeitungsstrecke verändernden Faltwinkel (51-54) derart angeordnet, dass während eines Transportes einer Verschlusskappe (70) durch die erste Transporteinrichtung entlang der Faltschiene (50) der Randbereich (72) entlang der Umfangrichtung des Mantels der Verschlusskappe (70) um eine orthogonal zur Drehachse orientierte und zur Drehachse beabstandete Faltachse in Richtung der Drehachse faltbar ist.

## Beschreibung

### Technisches Gebiet

Die Erfindung betrifft Vorrichtung zum Falten eines Randbereichs entlang einer Umfangrichtung eines Mantels einer Verschlusskappe für einen Behälter, zur Ausbildung eines Sicherungsrings an der Verschlusskappe, umfassend eine erste Transporteinrichtung zum Transportieren der Verschlusskappe entlang eines Transportweges, welcher eine Bearbeitungsstrecke umfasst, wobei die erste Transporteinrichtung einen um eine Drehachse rotierbaren Mitnehmer zur Aufnahme einer Verschlusskappe umfasst. Weiter betrifft die Erfindung ein entsprechendes Verfahren zum Falten eines Randbereichs entlang einer Umfangrichtung eines Mantels einer Verschlusskappe für einen Behälter.

### Stand der Technik

Um für die Verbraucher beim Kauf eines Behälters, wie z. B. einer Getränkeflasche, sicher zu stellen, dass sich der Behälter noch im Originalzustand befindet und nicht zuvor absichtlich oder unabsichtlich geöffnet wurde, werden Verschlusskappen für derartige Behälter zumeist mit einem Sicherungsring versehen. Dieser Sicherungsring ist mit einem die Verschlussfunktion erfüllenden Grundteil der Verschlusskappe über eine Sollbruchstelle verbunden, so dass beim Öffnen des Behälters die Sollbruchstelle zwangsweise beschädigt wird und damit von aussen her das erstmalige Öffnen des Behälters sicher erkennbar ist. Um diese Sicherungsfunktion zu gewährleisten, wird der Sicherungsring beim Abziehen oder Abschrauben des Kappenteils wenigstens bis zum Bruch der Sollbruchstelle am Behälter gehalten. Hierzu weist der Behälter an einem Stutzen, auf welchem die Verschlusskappe sitzt, in Abziehrichtung üblicherweise einen Hinterschnitt, z. B. in der Form eines Wulstes, auf, der vom Sicherungsring von unten her, d.h. entgegen einer Öffnungsrichtung, hintergriffen wird. Dadurch sperrt der Sicherungsring beim Abnehmen der Verschlusskappe gegen ein Abziehen am Wulst des Behälters, sodass es zu einem Aufreissen der Sollbruchstelle kommt. Typischerweise ist am Sicherungsring zu diesem Zweck ein umlaufender, mitunter unterbrochener, nach innen gefalteter Falz ausgebildet, mit welchem der Sicherungsring den Wulst am Behälter hintergreift. Es ist auch bekannt, anstelle eines Falzes einen verdickten Abschnitt innen am Sicherungsring vorzusehen.

Um zu verhindern, dass das Grundteil nach dem Abnehmen von dem Behälter getrennt werden kann, kann die Solbruchstelle derart ausgebildet sein, dass nach dem Abnehmen eine Verbindung zwischen dem Grundteil und dem Sicherungsring bestehen bleibt ("tethered cap"). Dies ist mit Blick auf eine ökologische Verträglichkeit, insbesondere eine Verringerung von z. B. unkontrolliert entsorgten Plastil<abfällen, vorteilhaft.

Oftmals werden derartige Sicherungsringe durch Einschneiden einer Schnittgeometrie in eine Verschlusskappe erzeugt. Die Schnittgeometrie entspricht einer oder mehreren Sollbruchstellen.

Üblicherweise wird nachdem der Falz, also der den Wulst hintergreifende Teil des Sicherungsrings, als Fortsatz der in einem Spritzgussverfahren hergestellten Kappe ausgebildet und vor oder nach dem Ausbilden der Schnittgeometrie nach innen geklappt. Für das nach innen klappen sind Vorrichtungen bekannt, welche in effizienter Weise den Falz-Teil mit Hilfe eines Zylinders nach innen falten. Dies bedingt jedoch, dass der Sicherungsring zumindest parallel zur Rotationsachse des Verschlusses ist - jedenfalls nicht über den Radius der Verschlusskappe hinausragt.

Bei anderen Ausführungsformen der Verschlusskappe, z. B. bei durch Tiefziehen hergestellten Verschlusskappen aus PET (Polyethylenterephthalat), besteht der Wunsch, dass der Bereich des Sicherungsrings radial nach aussen ragt und nach dem Einschneiden der Schnittgeometrie nach innen umgeklappt wird. Um den radial nach aussen ragenden Sicherungsring nach innen zu falten, sind gegenwärtig keine hinreichend effizienten Vorrichtungen und Verfahren bekannt.

### Darstellung der Erfindung

Aufgabe der Erfindung ist es, eine dem eingangs genannten technischen Gebiet zugehörende Vorrichtung zu schaffen, womit ein Randbereich, welcher vor dem Faltvorgang von der Verschlusskappe nach aussen gerichtet ist, entlang einer Umfangrichtung eines Mantels einer Verschlusskappe für einen Behälter besonders einfach und effizient gefaltet werden kann.

Die Lösung der Aufgabe ist durch eine Vorrichtung gemäss den Merkmalen des unabhängigen Anspruches 1 und ein Verfahren gemäss den Merkmalen des unabhängigen Anspruches 13 definiert.

Gemäss der Erfindung umfasst die Vorrichtung zum Falten eines Randbereichs entlang einer Umfangrichtung eines Mantels einer Verschlusskappe für einen Behälter, zur Ausbildung eines Sicherungsrings an der Verschlusskappe, folgendes:
a) eine erste Transporteinrichtung zum Transportieren der Verschlusskappe entlang eines Transportweges, welcher eine Bearbeitungsstrecke umfasst, wobei
b) die erste Transporteinrichtung einen um eine Drehachse rotierbaren Mitnehmer zur Aufnahme einer Verschlusskappe umfasst, wobei
c) entlang der Bearbeitungsstrecke eine stationäre Faltschiene mit einem sich entlang der Bearbeitungsstrecke verändernden Faltwinkel derart angeordnet ist, dass während eines Transportes einer Verschlusskappe durch die erste Transporteinrichtung entlang der Faltschiene der Randbereich entlang der Umfangrichtung des Mantels der Verschlusskappe um eine orthogonal zur Drehachse orientierte und zur Drehachse beabstandete Faltachse in Richtung der Drehachse faltbar ist.

Der Randbereich der Verschlusskappe ist vor dem Faltvorgang vorzugsweise im Wesentlichen radial nach aussen gerichtet. Solche Rohlinge sind besonders effizient durch Tiefziehen herstellbar. Dazu kann gleichzeitig oder nach dem Tiefziehen die Verschlusskappe ausgestanzt werden, wobei mit dem Stanzvorgang gleichzeitig der Randbereich gebildet wird. Besonders bevorzugt umfasst der Randbereich mehrere Flügel, welche vor dem Faltvorgang umfangseitig radial nach aussen abstehen. Die Flügel können grundsätzlich beliebige Formen aufweisen, wie zum Beispiel quadratisch, rechteckig, trapezförmig, kreissegmentförmig etc. Dem Fachmann ist klar, dass die Verschlusskappen auch anderweitig hergestellt werden (z.B. durch ein Spritzverfahren) respektive aus anderen Materialien hergestellt sein können.

Vorzugsweise befindet sich zwischen dem Randbereich und der Verschlusskappe eine Schwächungslinie. Diese dient dazu, dass der Sicherungsring mit bestimmtem Kraftaufwand von einem Konsumenten entfernt werden kann. Die Schwächungslinie umfasst vorzugsweise mehrere umfangseitig eingebrachte Schlitze. Diese werden bevorzugt eingeschnitten. Die Schwächungslinie kann vor oder nach dem Faltvorgang eingebracht werden. In Varianten kann die Faltschiene entsprechende Messer aufweisen, womit die Schwächungslinie gleichzeitig mit dem Faltvorgang eingebracht werden kann. Die Messer können derart ausgebildet sein, dass die Schnitttiefe kontinuierlich erhöht wird.

Die Verschlusskappen werden der Vorrichtung über bekannte Mittel bereitgestellt. Das Bereitstellen der Verschlusskappe kann auf eine Vielzahl von bekannten Arten erfolgen. Beispielsweise kann die Verschlusskappe aus einem Reservoir von einer Vereinzelungsvorrichtung wie z. B. einem Scheibensortierer oder einem Karussell bereitgestellt werden.

Die erste Transporteinrichtung erfasst die vereinzelt bereitgestellten Verschlusskappen mit dem Mitnehmer und transportiert diese längs des Transportweges. Dem Fachmann ist eine Vielzahl von Möglichkeiten bekannt, wie die erste Transporteinrichtung die Verschlusskappe mit dem Mitnehmer erfassen kann. Denkbar ist beispielsweise eine Aufnahme der Verschlusskappe in einer längs des Transportwegs beweglichen Aufnahme oder einem längs des Transportweges beweglichen Futter, welches die Verschlusskappe von aussen und unten umfasst (damit der Randbereich frei bleibt). In anderen Ausführungsformen kann der Mitnehmer einen Stützdorn umfassen, welcher in einen Innenraum der Verschlusskappe eingreift und so die Verschlusskappe längs des Transportweges transportiert.

Die erste Transporteinrichtung umfasst einen rotierbaren Mitnehmer zur Aufnahme einer Verschlusskappe. Der Mitnehmer kann die Verschlusskappe erfassen und ist rotierbar ausgebildet, so dass bei einem Transport der Verschlusskappe entlang der Faltschiene der Mitnehmer rotiert, so dass der Randbereich über den gesamten Umfang faltbar ist.

Der Transportweg, welchen die Verschlusskappe im Zuge des erfindungsgemässen Verfahrens durchläuft, bezeichnet zumindest einen Abschnitt eines Prozesspfads. Der Transportweg umfasst vorliegend wenigstens die Bearbeitungsstrecke, in welcher ein Randbereich des Mantels der Verschlusskappe gefaltet wird. Grundsätzlich kann die Bearbeitungsstrecke eine Mehrzahl von Bearbeitungsstationen umfassen wie z. B. ein Schneidmesser zur Erzeugung einer Schnittgeometrie im Mantel der Verschlusskappe, eine Druckstation zum Bedrucken der Verschlusskappe und/oder Stationen für weitere Bearbeitungsschritte der Verschlusskappe, in welchen eine Beschaffenheit der Verschlusskappe verändert wird.

Erfindungsgemäss umfasst die Bearbeitungsstrecke wenigstens eine stationäre Faltschiene mit einem sich entlang der Bearbeitungsstrecke verändernden Faltwinkel. Die Faltschiene bildet zumindest einen Teil der Bearbeitungsstrecke, kann insbesondere aber auch der gesamten Bearbeitungsstrecke entsprechen.

Die Faltschiene ragt derart in den Transportweg der Verschlusskappe, dass der Randbereich des Mantels der Verschlusskappe gefaltet wird, wenn diese von der Transporteinrichtung längs der Faltschiene transportiert wird.

Der Transportweg kann zum Zuführen der Verschlusskappe zur Bearbeitungsstrecke eine Zuführstrecke umfassen, welche in Prozessrichtung vor der Bearbeitungsstrecke liegt und bevorzugt direkt an diese anschliesst. In der Regel dient die Zuführstrecke nur der Zuführung der Verschlusskappe zur Bearbeitungsstrecke, d.h. es erfolgt auf diesem Abschnitt des Transportweges keine Bearbeitung der Verschlusskappe. Eine Zuführstrecke muss jedoch nicht zwingend vorhanden sein und die Verschlusskappe kann z. B. in einer Vereinzelungsvorrichtung erfasst und direkt der Bearbeitungsstrecke zugeführt werden.

Der Transportweg definiert durch seinen Verlauf im Bereich der Faltschiene eine Transportebene. Die Drehachse des Mitnehmers steht vorzugsweise senkrecht auf der Transportebene. Grundsätzlich kann die Drehachse zwar auch zur Transportebene verschwenkt sein, im Nachfolgenden wird von einer zur Transportebene senkrechten Drehachse ausgegangen, soweit nichts Anderes definiert wird.

Die Faltachse liegt in der Transportebene, respektive orthogonal zur Drehachse, und ist zur Drehachse beabstandet. Die Faltachse liegt in Bezug auf den Randbereich des Mantels als Tangente vor, welche den zu faltenden Randbereich vom Rest der Verschlusskappe trennt.

Der Faltwinkel wird als Winkel in einer Ebene rechtwinklig zur Transportebene gemessen, wobei die Transportebene den Winkel 0 bildet und die Drehachse damit einen Winkel von 90° aufweist. Der Faltwinkel kann damit zum Beispiel gleichmässig oder in mehreren Stufen zwischen 0° und 180° ansteigen. Bei einem Faltwinkel von 180° würde ein radial nach aussen gerichteter Randbereich der Verschlusskappe radial nach innen gefaltet (siehe dazu weiter unten). Die Faltschiene stellt das Werkzeug dar, mit welchem der Faltwinkel realisiert ist.

Der Vorteil der erfindungsgemässen Vorrichtung liegt darin, dass eine kontinuierlich arbeitende Vorrichtung zum Falten eines Randbereichs einer Verschlusskappe geschaffen wird, welche aufgrund der stationären Faltschienen einfach und mit wenigen beweglichen Teilen aufgebaut und aufgrund des Transportes mit einem rotierbaren Mitnehmer besonders effizient ist. Es besteht damit die Möglichkeit, mit der Vorrichtung parallel eine Vielzahl an Verschlusskappen gleichzeitig zu bearbeiten. Aufgrund des einfachen Aufbaus besteht auch die Möglichkeit, die Faltschiene beliebig zu formen, um diese in einer bestehenden Anlage möglichst platzsparend zu integrieren. Zum Beispiel kann die Faltschiene gerade, gekrümmt etc. ausgebildet sein. Damit kann die Vorrichtung zum Beispiel besonders flexibel als Übergang zwischen zwei Bearbeitungsstationen (z.B. hin zu einer nachfolgenden Bedrucl<ungsstation) integriert werden.

Vorzugsweise umfasst die Faltschiene einen ersten Faltschienenabschnitt mit einer ersten Faltfläche und einen in einer Transportrichtung der Verschlusskappe an den ersten Faltschienenabschnitt angrenzenden zweiten Faltschienenabschnitt mit einer zweiten Faltfläche, wobei die erste Faltfläche einen ersten Faltwinkel aufweist und die zweite Faltfläche einen zweiten Faltwinkel aufweist, wobei sich der erste Faltwinkel von dem zweiten Faltwinkel unterscheidet. Damit kann der Randbereich stufenweise gefaltet werden. Das stufenweise Falten hat den Vorteil, dass ein Zurückspringen des Randbereichs verhindert oder vermindert werden kann, das Material kann zwischen den einzelnen Faltschritten relaxieren.

Die Transportrichtung ist dabei als Richtung entlang der Faltschiene definiert, wobei je nach Geometrie der Faltschiene diese Richtung nicht konstant einer Gerade entlang verlaufen muss. Die Transportrichtung verläuft vom ersten Faltschienenabschnitt hin zum zweiten Faltschienenabschnitt.

Damit kann der Faltwinkel stufenweise erhöht werden, um schliesslich den gewünschten Faltwinkel des Randbereichs zu erreichen. Der erste Faltschienenabschnitt umfasst vorzugsweise eine Faltfläche, welche zwischen zwei Randabschnitten im Wesentlichen planar ist.

Die Faltfläche kann im Querschnitt rechtwinklig zur Transportebene und rechtwinklig zur Transportrichtung insbesondere im Randbereich jeweils eine Krümmung aufweisen, welche zum Beispiel eine Wulstbildung beim Faltvorgang aufnehmen kann oder eine bessere Stützung des Randbereichs gewährleisten kann. Die Faltfläche kann jedoch im Querschnitt auch anderweitig geformt sein, zum Beispiel die Form eines Kreisbogenabschnitts oder einer anderweitig geformten Kurve aufweisen. Die optimale Form der Faltfläche ist vorzugsweise anhand einer in der Drehachse liegenden Querschnittsfläche des zu faltenden Randabschnitts zu bestimmen.

Vorzugsweise umfasst ein Übergang zwischen dem ersten Faltschienenabschnitt und dem zweiten Faltschienenabschnitt eine Rampe, welche die erste Faltfläche mit der zweiten Faltfläche verbindet. Die Rampe dient dazu, den Randbereich mit geringem Widerstand vom ersten Faltwinkel zum zweiten Faltwinkel zu überführen. Die Rampe ist insbesondere von Vorteil, wenn der Randbereich vor dem Faltvorgang mehrere radial abstehende und in der Transportebene liegende Flügel umfasst. In diesem Fall kann mit der Rampe ein Verhaken eines Flügels im Übergangsbereich zwischen den beiden Faltflächen verhindert werden.

Die Rampe weist vorzugsweise einen Winkel zur Faltfläche zwischen 15° und 70°, vorzugsweise zwischen 35° und 60° auf. Der Winkel ist einerseits hinreichend gross zu wählen, damit die Rampe möglichst kurz ist und die Vorrichtung kompakt bleibt - anderseits ist der Winkel auch hinreichend klein zu wählen, so dass der Randbereich und damit die Verschlusskappe beim Übergang zwischen den Faltwinl<eln einen möglichst geringen Widerstand erfährt. Vorzugsweise ist die Rampe im Verhältnis zur Länge des Faltschienenabschnitts in der Transportrichtung kurz, insbesondere beträgt die Länge der Rampe weniger als 10%, vorzugsweise weniger als 5% der Länge des ersten respektive zweiten Faltschienenabschnitts.

In Varianten kann der erste Faltschienenabschnitt auch direkt an den zweiten Faltschienenabschnitt angrenzen, insbesondere wenn eine Differenz des ersten Faltwinl<els zum zweiten Faltwinkel klein ist. In diesem Fall kann zum Beispiel beim Übergang zwischen dem ersten und zweiten Faltschienenabschnitt eine Kante arrondiert sein, um dem Randabschnitt beim Übergang einen geringeren Widerstand zu bieten. Weiter kann der erste Faltschienenabschnitt auch einen sich kontinuierlich ändernden Faltwinkel aufweisen, welcher schliesslich nahtlos und ohne Rampe in den zweiten Faltschienenabschnitt übergeht.

Bevorzugt umfasst die Faltschiene weiter einen sich an den zweiten Faltschienenabschnitt angrenzenden dritten Faltschienenabschnitt mit einer dritten Faltfläche und einen sich an den dritten Faltschienenabschnitt angrenzenden vierten Faltschienenabschnitt mit einer vierten Faltfläche, wobei die dritte Faltfläche rechtwinklig zur Drehachse einen dritten Faltwinkel aufweist und die vierte Faltfläche rechtwinklig zur Drehachse einen vierten Faltwinkel aufweist. Damit umfasst die Vorrichtung vorzugsweise mindestens vier Faltschienenabschnitte. Die Faltwinkel nehmen dabei in der Transportrichtung zu. Damit ist der vierte Faltwinkel grösser als der dritte Faltwinkel und der dritte Faltwinkel ist grösser als der zweite Faltwinkel. Damit ergibt sich eine stufenweise Vergrösserung des Faltwinl<els. Vorzugsweise weisen auch der dritte und der vierte Faltschienenabschnitt einen im Wesentlichen konstanten Faltwinkel auf und sind damit - abgesehen vom Faltwinkel - analog zum ersten Faltschienenabschnitt und zweiten Faltschienenabschnitt ausgebildet. In der Praxis hat sich gezeigt, dass mit 4 bis 8 Faltschienenabschnitten besonders gute Resultate bei üblichen Verschlusskappen beispielsweise für Getränkeflaschen zwischen 0.25 L und 1.5 L erreicht werden können. Dem Fachmann ist jedoch klar, dass die Vorrichtung auch mit neun, zehn oder mehr Faltschienenabschnitten ausgestattet sein kann. Dies hängt insbesondere von dem gewünschten Faltwinkel sowie vom Material der Verschlusskappen sowie von der Materialstärke des Randbereichs ab.

In Varianten können auch nur genau zwei oder genau drei Faltschienenabschnitte vorgesehen sein. Weiter können ein oder mehrere Faltschienenabschnitte der Faltschiene auch einen sich kontinuierlich ändernden Faltwinkel aufweisen (siehe oben).

Vorzugsweise sind zumindest zwei benachbarte Faltschienenabschnitte, zum Beispiel der erste Faltschienenabschnitt und der zweite Faltschienenabschnitt, einstückig ausgebildet. Damit kann die Faltschiene und insbesondere ein Übergang (Rampe, siehe oben) zwischen einzelnen benachbarten Faltschienenabschnitten mit konstantem Faltwinkel besonders präzise ausgeführt werden.

In Varianten können die Faltschienenabschnitte auch als separate Teile vorliegen, welche zu einer Faltschiene zusammengesetzt werden können. Damit wird ein modularer Aufbau ermöglicht, womit kostengünstig Anpassungen an den einzelnen Faltwinl<eln vorgenommen werden können, indem die entsprechenden Faltschienenabschnitte ausgetauscht werden.

Vorzugsweise ist die Faltschiene aus einem Rohling aus Metall, vorzugsweise aus Stahl, hergestellt, insbesondere durch einen Fräsvorgang, einen Schleifvorgang oder beiden Vorgängen. In Varianten kann die Faltschiene auch aus anderen Materialien hergestellt sein, zum Beispiel aus einem Verbundwerkstoff. Dem Fachmann sind dazu weitere Varianten bekannt.

Bevorzugt liegt der erste Faltwinkel zwischen 20° und 60°, insbesondere zwischen 30° und 50°. Es hat sich gezeigt, dass dieser Winkelbereich für radial nach aussen ragende Randbereiche von Verschlusskappen einen besonders idealen Einstieg in die Faltschiene darstellt. Um den Eingang für den Randbereich zum ersten Faltschienenabschnitt zu vereinfachen, ist vorzugsweise eine Rampe vorgesehen, welche einen Übergang von der Transportebene zum ersten Faltwinkel bildet. Diese Rampe ist insbesondere dann sinnvoll, wenn der ungefaltete Randbereich im Wesentlichen radial nach aussen ragt.

In Varianten kann der erste Faltwinkel auch kleiner als 20° oder grösser als 60° sein. Der ideale erste Faltwinkel ergibt sich aus der Ausrichtung des Randbereichs der Verschlusskappe vor dem Faltvorgang, sowie aus dem Material und der Materialstärke des Randbereichs.

Vorzugsweise vergrössert sich der Faltwinkel zwischen benachbarten Faltschienenabschnitten in der Transportrichtung um einen Winkel zwischen 5° und 35°, vorzugsweise um einen Winkel zwischen 10° und 30°. Diese Winkelschritte zwischen benachbarten Faltschienenabschnitten haben sich in der Praxis als besonders ideal herausgestellt. Damit sind vorzugsweise aufeinanderfolgende Schrittweiten der Winkel unterschiedlich. Einerseits wird damit der Randbereich nicht zu stark beansprucht, womit Beschädigungen an der Verschlusskappe vermieden werden können. Weiter wird damit verhindert, dass die Verschlusskappen an einem Übergang zwischen zwei Faltschienenabschnitten hängen bleiben - damit wird ein robustes Verfahren gewährleistet. Anderseits wird damit ein hinreichend grosser Faltwinl<elschritt erreicht, womit die Gesamtlänge der Bearbeitungsstrecke im Rahmen gehalten wird und das Verfahren effizient durchgeführt werden kann.

In Varianten kann der Faltwinkel zwischen zwei benachbarten Faltschienenabschnitten sich auch um einen Winkel von weniger als 5° oder um einen Winkel von mehr als 35° vergrössern.

Bevorzugt liegt ein grösster Faltwinkel zwischen 120° und 180°, insbesondere zwischen 140° und 160°. Damit kann ein im Wesentlichen radial nach aussen ragender Randbereich im Wesentlichen radial nach innen gefaltet werden, um so einen Sicherungsring zu bilden.

In Varianten kann der grösste Faltwinkel auch kleiner als 120° sein.

Sofern ein Umklappen von mehr als 180° notwendig ist, kann dies mit einem zusätzlich Faltschritt, z. B. mit einem einfachen linearen Stössel, erfolgen oder direkt durch Aufschrauben der Verschlusskappe auf die Flasche erreicht werden.

Das Verfahren kann somit weiter einen sich dem Transport entlang der Faltschiene anschliessenden Nachbearbeitungsschritt zum Vergrössern des Faltwinl<els umfassen, wobei insbesondere ein Zylinder koaxial zur Verschlusskappe derart verfahren wird, dass der Zylinder den Randbereich kontaktiert und nach unten, in die Verschlusskappe hinein faltet, um den Faltwinkel zu vergrössern. Dazu wird der Zylinder vorzugsweise ausschliesslich axial verfahren und nicht relativ zur Kappe rotiert.

Das Schneiden der Schwächungslinie kann vor oder während dem Faltvorgang mit der Faltschiene, zwischen dem Faltvorgang mit der Faltschiene und dem Nachbearbeitungsschritt, erfolgen. Weiter kann das Schneiden auch gleichzeitig oder nachträglich zum Nachbearbeitungsschritt erfolgen.

Vorzugsweise wird in einem ersten Schritt mit der Faltschiene der Randbereich auf einen Faltwinkel von mehr als 90°, vorzugsweise auf einen Faltwinkel zwischen 120° und 180° gefaltet und in einem zweiten Schritt in einer Nachbearbeitung mit einem Zylinder in herkömmlicher Weise der Faltwinkel weiter vergrössert, insbesondere auf einen Winkel grösser als 180°, vorzugsweise auf einen Winkel grösser als 220°. Dazu wird in bekannter Weise der Zylinder koaxial zur Verschlusskappe derart verfahren, dass der Randbereich mit dem Zylinder erfasst und nach unten, in die Verschlusskappe hinein gefaltet wird. Dem Fachmann sind auch andere Techniken bekannt, um nach der Bearbeitung mit der Faltschiene den Faltwinkel weiter zu vergrössern.

Der Nachbearbeitungsschritt mit dem Zylinder ist hocheffizient, da es sich um eine besonders einfachen und schnellen Verfahrensschritt handelt. Daher kann es von Vorteil sein, das Verfahren derart zu optimieren, dass mit der Faltschiene respektive den Faltschienenabschnitten der Faltwinkel nur soweit vergrössert wird, als dass danach mit dem Zylinder der weitere Faltvorgang übernommen werden kann.Der mit der Faltschiene erreichte Faltwinkel erfolgt in diesem Fall vorzugsweise möglichst geringfügig über 90°. Danach kann mit dem Zylinder ein Faltwinkel von grösser 90°, insbesondere grösser 120° besonders bevorzugt grösser 180° eingestellt werden.

Sofern jedoch ein Faltwinkel von 180° oder weniger ausreichend ist, kann der Faltwinkel auch ausschliesslich durch die Faltschiene erreicht werden, wobei auf einen Nachbearbeitungsschritt zum Vergrössern des Faltwinl<els verzichtet wird.

Vorzugsweise weisen der erste Faltschienenabschnitt und der zweite Faltschienenabschnitt eine Mindestlänge auf, welche einem Verschlussl<appenumfang entspricht. Dadurch wird sichergestellt, dass eine Verschlusskappe mindestens einmal am Faltschienenabschnitt abgerollt werden kann, womit der Randbereich über den gesamten Umfang mit dem Faltschienenabschnitt bearbeitet werden kann.In einer bevorzugten Ausführungsform weisen sämtliche Faltschienenabschnitte diese Mindestlänge auf.

In Varianten kann der Faltschienenabschnitt auch eine geringere Länge aufweisen, als einen Verschlussl<appenumfang, insbesondere, wenn zum Beispiel einer oder mehrere der Faltschienenabschnitte einen sich kontinuierlich ändernden Faltwinkel aufweist.

Bevorzugt weist die Faltschiene eine Kreisbogenform auf. Damit wird eine besonders kompakte Vorrichtung geschaffen, bei welcher insbesondere der Verschlussl<appeneintrag nahe am Verschlussl<appenaustrag angeordnet sein kann.

In Varianten kann die Faltschiene auch anderweitige Formen aufweisen, insbesondere kann sie geradlinig, mäanderförmig etc. ausgebildet sein. Dem Fachmann sind weitere Formen bekannt.

Vorzugsweise ist die Faltschiene und/oder der Deckel beheizbar. Insbesondere kann spezifisch der Übergang zwischen dem Randbereich und der Verschlusskappe beheizbar sein. Damit kann der Randbereich der Verschlusskappe erwärmt werden. So kann einerseits das Umformen vereinfacht werden und anderseits kann die Materialbeanspruchung durch den Faltvorgang verringert werden. Weiter kann damit das Verfahren mit höherer Geschwindigkeit durchgeführt werden, womit wiederum ein besonders effizientes Verfahren geschaffen wird. Das Erwärmen des Randbereichs respektive der Verschlusskappe bewirkt weiter ein schnelleres Relaxieren des Faltwinl<els des Randbereichs. Die Beheizbarkeit kann in für den Fachmann bekannten Art und Weisen erreicht werden, insbesondere zum Beispiel durch eine direkte elektrische Beheizung oder durch eine Wärmeübertragung (z.B. Heatpipes oder dergleichen) aus einer beliebigen Wärmequelle (Abwärme eines Maschinenteils, Gebäudeheizung, Warmwasserboiler etc.).

In Varianten oder zusätzlich kann auch die Transporteinrichtung, insbesondere der Mitnehmer beheizbar sein. Weiter kann die Verschlusskappe auch anderweitig beheizbar sein, z.B. über Wärmestrahlung, Heissluft, Heissdampf oder dergleichen. Gegebenenfalls kann auf die Beheizbarkeit der Faltschiene und der Transporteinrichtung auch verzichtet werden.

Während der Randbereich mit der Faltschiene in Kontakt steht, ist der Faltwinkel konstant. Sobald der Randbereich aufgrund der Rotation der Verschlusskappe die Faltschiene verlässt, folgt ein Relaxieren des Faltwinl<els. Die Änderung des Faltwinl<els durch das Relaxieren kann mit einer geeigneten Temperaturwahl optimiert werden. Vorzugsweise wird daher die Verschlusskappe respektive der Randbereich auf eine Temperatur von 20C° bis 100°C, besonders bevorzugt 30° bis 80°C, weiter bevorzugt 40°C bis 70°C, erwärmt. Dieser Temperaturbereich hat sich insbesondere bei Verschlusskappen/Randbereichen aus PET als besonders vorteilhaft erwiesen. In diesem Temperaturbereich kann der Faltvorgang besonders effizient durchgeführt werden. Dem Fachmann ist klar, dass der Temperaturbereich je nach Material, Materialstärke, Faltwinl<elschritten etc. auch anders gewählt werden kann, insbesondere zum Beispiel bei HDPE (schwachverzweigtes Polyethylen) oder anderen Kunststoffen. Bei zu tiefer Temperatur besteht die Gefahr, dass das Material rissig werden oder sogar brechen kann.Bei zu hoher Temperatur besteht hingegen die Gefahr, dass sich das Material dauerhaft in unerwünschter Art verformt. In diesem Temperaturbereich kann zudem die Relaxationszeit verringert werden, was wiederum zu einem effizienten Verfahren führt.

Bevorzugt ist der Mitnehmer über eine entlang der Bearbeitungsstrecke stationär angeordnete Reibfläche rotierbar. Besonders bevorzugt wird der Mitnehmer indirekt über die Verschlusskappe an der Reibfläche rotiert. Damit kann die Verschlusskappe antriebsfrei über einen Kontakt mit der Reibfläche rotiert werden, womit ein besonders einfacher Aufbau der Vorrichtung erreicht wird. Die Verschlusskappe wird im Verfahren durch die Transporteinrichtung erfasst und entlang der Reibfläche abgerollt. Die Faltschiene ist bezüglich der Reibfläche derart angeordnet, dass gleichzeitig mit dem Abrollen der Verschlusskappe an der Reibfläche der Randbereich an der Faltschiene gefaltet werden kann.

Grundsätzlich kann der Mitnehmer auch direkt an einer Reibfläche rotiert werden. Damit kann die Verschlusskappe geschont werden. Allerdings erschwert sich damit die Synchronisation der Rotation mit der Abrollbewegung an der Faltschiene, insbesondere wenn die Verschlusskappen grössere Herstellungstoleranzen bei den Abmessungen aufweisen.

In Varianten kann auf die Reibfläche auch verzichtet werden. In diesem Fall kann der Mitnehmer über einen Antrieb verfügen, um ein Abrollen an der Faltschiene zu erreichen.

Vorzugsweise umfasst die Reibfläche eine Rändelung, welche im Betrieb der Vorrichtung mit einer Rändelung einer Verschlusskappe in Eingriff steht. Gängige Verschlusskappen weisen typischerweise Umfangseitig am Mantel eine Rändelung auf, um die Haftreibung zwischen den Fingern und der Verschlusskappe beim Öffnen zu verbessern. Diese Rändelung kann ebenfalls verwendet werden, um das Abrollen der Verschlusskappen entlang der Faltschiene zu verbessern. Dazu ist vorzugsweise bezüglich der Transportebene unterhalb der Faltschiene eine Rändelschiene vorgesehen, welche parallel zur Faltschiene verläuft. Über die Transporteinrichtung wird die Verschlusskappe an die Rändelschiene geführt, wo die Rändelung der Verschlusskappe in Eingriff mit der Rändelung der Rändelschiene steht. Wird nun die Transporteinrichtung entlang der Faltschiene verfahren, so wird über den Eingriff der Rändelung der Mitnehmer mit der Verschlusskappe rotiert respektive abgerollt. Gleichzeitig wird durch die Faltschiene der Randbereich der Verschlusskappe gefaltet.

In einer weiteren Variante kann die Verschlusskappe auch an einer Innenseite des Mantels gerändelt sein, wobei der Mitnehmerdorn aussen eine entsprechende Rändelung aufweist. Auch damit kann eine gesichertes Abrollen der Verschlusskappe gewährleistet werden.

In Varianten kann auf die Rändelung auch verzichtet werden. Dem Fachmann sind hinreichend Materialien bekannt, womit auch ohne Rändelung eine hinreichend grosse Reibung erzeugt werden kann, um die Verschlusskappe antriebsfrei entlang der Faltschiene zu rotieren.

Vorzugsweise ist die Rändelschiene als separates Bauteil ausgeführt, wobei die Faltschiene auf der Rändelschiene montiert werden kann, insbesondere zum Beispiel durch Verschrauben, Verschweissen, Verkleben oder durch andere dem Fachmann bekannte Befestigungsmethoden. Die Ausführung als separates Bauteil hat den Vorteil, dass die Vorrichtung gesamthaft einfacher aufgebaut werden kann, da gegebenenfalls für die Rändelschiene auch Standardprodukte eingesetzt werden können.Bei Beschädigungen oder Abnutzungen an der Rändelschiene respektive an der Faltschiene können diese separat ersetzt werden, womit die Wartungskosten und damit die Betriebskosten tief gehalten werden können.

In Varianten kann die Rändelschiene auch einstückig mit der Faltschiene ausgebildet sein.

Bevorzugt weist die Vorrichtung für jeden Faltschienenabschnitt mindestens zwei, vorzugsweise mindestens drei Transporteinrichtungen auf, so dass in einem Verfahren zeitgleich pro Faltschienenabschnitt mindestens zwei, vorzugsweise mindestens drei, Verschlusskappen bearbeitbar sind. Insbesondere genau drei Transporteinrichtungen pro Faltschienenabschnitt sind von besonderem Vorteil, wenn ein Faltschienenabschnitt eine Länge aufweist, welche einem Umfang der Verschlusskappe entspricht (siehe oben). Damit wird eine besonders effiziente Vorrichtung zum Falten von Randbereichen einer Verschlusskappe geschaffen.

In Varianten kann pro Faltschienenabschnitt auch genau eine Transporteinrichtung vorgesehen sein.

Besonders bevorzugt umfasst die Vorrichtung pro Faltschienenabschnitt mindestens drei Transporteinrichtungen, welche in der Transportrichtung innerhalb einer Länge eines Umfangs einer Verschlusskappe hintereinander aufgereiht sind.

In Varianten können die Transporteinrichtungen auch einen grösseren Abstand zueinander aufweisen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Schrägansicht einer Faltschiene umfassend drei Faltschienenabschnitte mit einer Rändelschiene;
- Fig. 2a-2d: schematische Darstellungen einer Faltschiene mit vier Faltschienenabschnitten in der Transportrichtung, während der Bearbeitung einer Verschlusskappe bei den jeweiligen Faltschienenabschnitten;
- Fig. 2e, 2f: schematische Darstellungen vor und nach einer Nachbearbeitung des Randbereichs mit einem Zylinder;
- Fig. 3a-3c: schematische Darstellungen einer Faltschiene in der Transportrichtung mit unterschiedlichen Faltwinl<eln;
- Fig. 4: eine schematische Darstellung einer Draufsicht auf eine Verschlusskappe mit radial angeordneten Flügeln vor dem Faltvorgang;
- Fig. 5a-5c: schematische Darstellungen von Schnittbildern durch die Verschlusskappe vor respektive während aufeinanderfolgenden Stationen des Faltvorgangs; und
- Fig. 6: ein Diagramm zur Veranschaulichung eines Faltverhaltens der Flügel in Abhängigkeit der Temperatur.

Grundsätzlich sind in den Figuren gleiche Teile mit gleichen Bezugszeichen versehen.

### Wege zur Ausführung der Erfindung

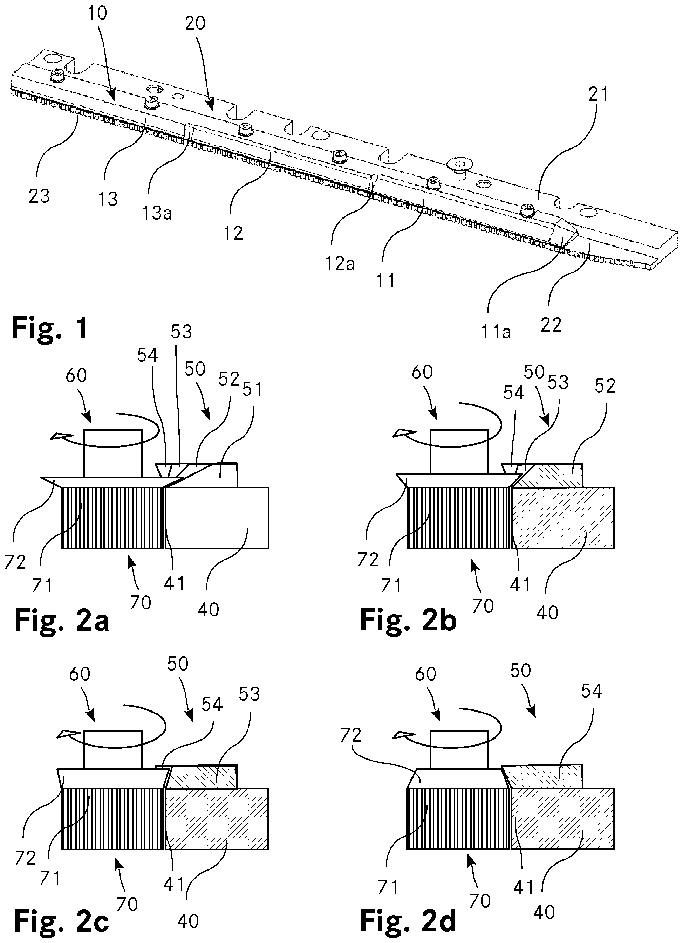

Die Figur 1 zeigt eine schematische Darstellung einer Schrägansicht einer Faltschiene 10 umfassend drei Faltschienenabschnitte 11,12 und 13, sowie eine Rändelschiene 20.

Die Rändelschiene 20 ist vorliegend als Träger für die Faltschiene 10 ausgebildet. Sie umfasst eine Leiste mit einem in der Längsrichtung ausgerichteten Absatz 22, auf welchem die Faltschiene 10 befestigt ist. Seitlich, entlang der Transportrichtung, umfasst der Absatz 22 eine Rändelung 23. Die Rändelung 23 ist im Verfahren in Eingriff mit der Rändelung der Verschlusskappe (siehe unten).

Parallel zum Absatz 22 verläuft ein Bereich 21 mit grösserer Materialstärke. Dieser Bereich 21 ist mit diversen Löchern und Ausnehmungen versehen. Diese können für das Befestigen und Ausrichten der Rändelschiene 20 und der an der Rändelschiene befestigten Faltschiene 10 an einem Arbeitstisch (nicht dargestellt) ausgebildet sein.

Die Faltschiene 10 ist in der vorliegenden Ausführungsform als Leiste ausgebildet und umfasst einen ersten Faltschienenabschnitt 11, einen zweiten Faltschienenabschnitt 12 und einen dritten Faltschienenabschnitt 13.

Der erste Faltschienenabschnitt 11 umfasst in der Transportrichtung eine Einstiegsrampe 11a, über welche der Randbereich der Verschlusskappe von einer Transportebene in den ersten Faltwinkel überführt wird. Damit wird verhindert, dass der Randbereich am ersten Faltschienenabschnitt anstösst respektive hängen bleibt. An die Einstiegsrampe 11a schliesst sich der erste Faltschienenabschnitt 11 nahtlos an. Dieser weist zur Transportebene einen Winkel von 45° auf. Damit kann der Randbereich der Verschlusskappe von der Transportebene bei einem Winkel zwischen 0° und 45° auf den ersten Faltwinkel von 45° gefaltet werden.

An den ersten Faltschienenabschnitt 11 schliesst sich eine Übergangsrampe 12a an, welche den ersten Faltschienenabschnitt 11 mit dem zweiten Faltschienenabschnitt 12 verbindet. Auch hier soll mit der Übergangsrampe 12a dem Randbereich ein möglichst geringer Wiederstand entgegengesetzt werden. Der zweite Faltschienenabschnitt 12 weist vorliegend einen zweiten Faltwinkel von 65° auf. Der zweite Faltwinkel ist damit um 20° grösser als der erste Faltwinkel.

An den zweiten Faltschienenabschnitt 12 schliesst sich wiederum eine Übergangsrampe 13a an, welche den zweiten Faltschienenabschnitt 12 mit dem dritten Faltschienenabschnitt 13 verbindet. Wiederum soll mit der Übergangsrampe 13a dem Randbereich ein möglichst geringer Widerstand entgegengesetzt werden. Der dritte Faltschienenabschnitt 13 weist vorliegend einen dritten Faltwinkel von 85° auf. Der dritte Faltwinkel ist damit wiederum 20° grösser als der zweite Faltwinkel.

Der erste, zweite und dritte Faltschienenabschnitt weisen vorliegend eine Länge auf, welche dem Aussenumfang respektive dem Abrollumfang der zu bearbeitenden Verschlusskappen entspricht.

Die Figuren 2a bis 2d zeigen schematische Darstellungen einer Faltschiene 50 mit vier Faltschienenabschnitten 51, 52, 53 und 54 in der Transportrichtung, während der Bearbeitung einer Verschlusskappe 60 bei den jeweiligen Faltschienenabschnitten.

Die Figur 2a zeigt die Faltschiene 50 in der Transportrichtung. Die Faltschiene 50 weist 4 Faltschienenabschnitte 51, 52, 53 und 54 auf, wobei der jeweilige Faltwinkel der Faltschienenabschnitte 51, 52, 53 und 54 in der Transportrichtung zunimmt. Der erste Faltschienenabschnitt 51 weist einen Faltwinkel von 45° auf, der zweite Faltschienenabschnitt 52 weist einen Faltwinkel von 65° auf, der dritte Faltschienenabschnitt 53 weist einen Faltwinkel von 85° auf und der vierte Faltschienenabschnitt 54 weist einen Faltwinkel von 105° auf. Sämtliche Faltschienenabschnitte weisen eine Mindestlänge eines Umfangs der Verschlusskappe auf.

Die Faltschiene 50 ist auf einer Rändelschiene 40 montiert. Die Rändelschiene weist seitlich, in der Transportrichtung eine Rändelung 41 auf. Die Verschlusskappe 70 weist eine korrespondierende Rändelung 71 auf, welche im Verfahren im Eingriff mit der Rändelung 41 der Rändelschiene ist. Die Verschlusskappe 70 umfasst weiter einen Randbereich 72, welcher an den Mantel mit der Rändelung 71 angrenzt. In unbearbeitetem Zustand ragt der Randbereich 72 im Wesentlichen radial nach aussen. Die Verschlusskappe 70 ist durch einen rotierbaren Mitnehmer 60 gehalten. Mit dem Mitnehmer 60 wird die Verschlusskappe 70 an der Rändelschiene 40 abgerollt. Dabei steht der Randbereich in Kontakt mit dem jeweiligen Faltschienenabschnitt der Faltschiene 50.

In der Figur 2a liegt der Randbereich 72 bereits auf dem ersten Faltschienenabschnitt 51 auf und weist damit zur Transportebene einen Winkel von 45° auf. Die Figur 2a zeigt zudem die Verschlusskappe 70 am Ende des ersten Faltschienenabschnittes 51, da der Randbereich 72 bereits über den gesamten Umfang einen Winkel von 45° zur Transportebene aufweist.

Die Figur 2b zeigt eine zur Figur 2a analoge Darstellung, wobei die Verschlusskappe nun den zweiten Faltschienenabschnitt 52 durchlaufen hat. Die Faltschiene 50/Rändelschiene 40 ist vorliegend im Querschnitt durch den zweiten Faltschienenabschnitt 52 gezeigt. Der Randbereich 72 weist nun einen Winkel von 65° zur Transportebene auf.

Die Figur 2c zeigt eine zur Figur 2a analoge Darstellung, wobei die Verschlusskappe nun den dritten Faltschienenabschnitt 53 durchlaufen hat. Die Faltschiene 50/Rändelschiene 40 ist im Querschnitt durch den dritten Faltschienenabschnitt 53 gezeigt. Der Randbereich 72 weist nun einen Winkel von 85° zur Transportebene auf.

Die Figur 2d zeigt eine zur Figur 2a analoge Darstellung, wobei die Verschlusskappe nun den vierten Faltschienenabschnitt 54 durchlaufen hat. Die Faltschiene 50/Rändelschiene 40 ist im Querschnitt durch den vierten und vorliegend letzten Faltschienenabschnitt 54 gezeigt. Der Randbereich 72 weist nun einen Winkel von 105° zur Transportebene auf.

Mit der Faltschiene kann ein maximaler Winkel von 180° erreicht werden. In diesem Fall ragt der Randbereich in der Transportebene bezüglich des Mantels der Verschlusskappe radial nach innen. Grundsätzlich kann dieser initiale Faltwinkel ausreichen, so dass das vollständige Umklappen und damit die Funktion des Sicherungsrings durch Aufschrauben der Verschlusskappe auf die Flasche erreicht werden kann.

Anderseits kann ab einem Faltwinkel von mehr als 90°, zum Beispiel bei 105° oder bei 180°, ein Nachbearbeitungsschritt vorgesehen sein, um den Randbereich über einen Faltwinkel von 180° hinaus zu falten, so dass der Randbereich nach innen, in die Verschlusskappe hinein gefaltet wird. Damit wird das Aufschrauben der Verschlusskappe auf einen Behälter weniger fehleranfällig. Insbesondere wenn sich der Faltwinkel nach dem Faltprozess auf weniger als 180° oder sogar auf weniger als 90° verringert, kann der Randbereich am Gewinde des Behälters anstehen respektive verkanten, womit ein Aufschrauben nicht möglich ist, oder der Randbereich wird durch das Aufschrauben in fehlerhafter Weise radial nach aussen geführt, womit die Funktion des Sicherungsrings nicht erreicht wird.

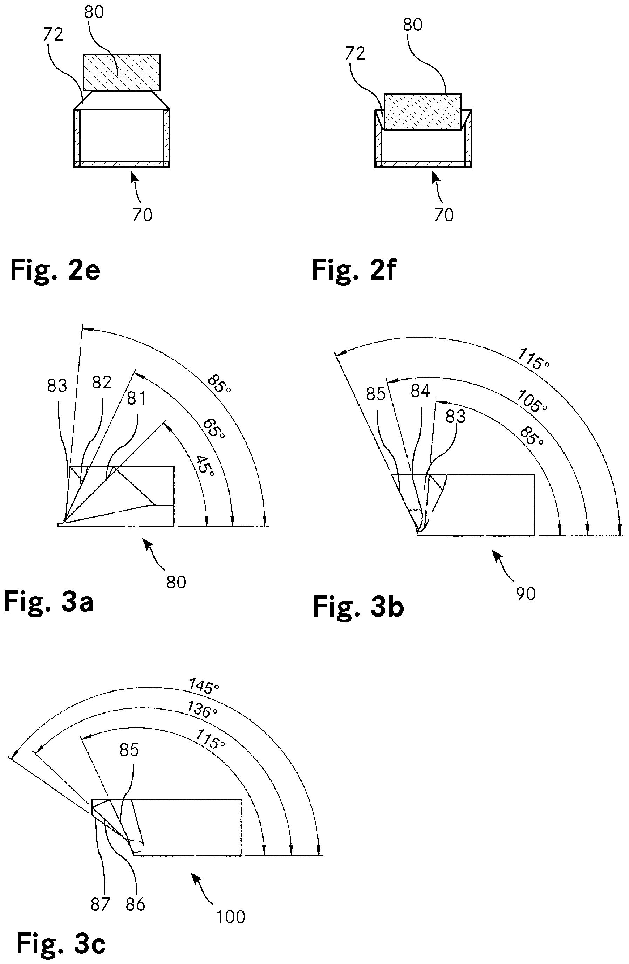

Die Figuren 2e und 2f zeigen schematische Darstellungen vor und nach einer solchen Nachbearbeitung des Randbereichs 72 der Verschlusskappe 70 mit einem Zylinder 80. Der Zylinder 80 weist einen geringeren Durchmesser auf, als der Innendurchmesser der Verschlusskappe 70. Die Verschlusskappe 70 wird koaxial zum Zylinder 80 positioniert (siehe Figur 2e). Anschliessend wird der Zylinder 80 in axialer Richtung nach unten gefahren, so dass der Zylinder 80 in Kontakt mit dem Randbereich tritt und diesen nach unten, in die Verschlusskappe 70 hinein faltet (siehe Figur 2f). Nach Abschluss des Faltvorgangs mit dem Zylinder 80 können Faltwinkel grösser als 180° erreicht werden (vorliegend beträgt der Faltwinkel rund 240°).

Die Figuren 3a bis 3c zeigen schematische Darstellungen einer Faltschiene in der Transportrichtung mit unterschiedlichen Faltwinl<eln. Die vorliegende Faltschiene umfasst drei Teilbereiche 80, 90, 100 mit jeweils drei Faltschienenabschnitten, wobei sich die drei Figuren jeweils in einem Faltschienenabschnitt überlappen (somit total sieben Faltschienenabschnitte).

Die Figur 3a zeigt einen ersten Faltschienenteilbereich 80 mit drei Faltschienenabschnitten 81, 82 und 83. Der erste Faltschienenabschnitt 81 weist einen Faltwinkel vom 45°, der zweite Faltschienenabschnitt 82 weist einen Faltwinkel von 65° auf und der dritte Faltschienenabschnitt 83 weist einen Faltwinkel von 85° auf.

Die Figur 3b zeigt einen zweiten Faltschienenteilbereich 90 mit drei Faltschienenabschnitten 83, 84 und 85. Der vierte Faltschienenabschnitt 84 weist einen Faltwinkel vom 105° und der fünfte Faltschienenabschnitt 85 weist einen Faltwinkel von 115° auf.

Die Figur 3c zeigt einen dritten Faltschienenteilbereich 100 mit drei Faltschienenabschnitten 85, 86 und 87. Der sechste Faltschienenabschnitt 86 weist einen Faltwinkel vom 136° und der siebente Faltschienenabschnitt 87 weist einen Faltwinkel von 145° auf.

In den vorliegenden Ausführungsformen ist die Bearbeitungsstrecke und damit die Faltschiene jeweils geradlinig dargestellt. Dem Fachmann ist aber klar, dass diese auch die Form eines Kreisbogenabschnittes aufweisen kann.

Die Transporteinrichtung umfasst in den vorliegenden Ausführungsformen einen Mitnehmer, welcher einen Aussendurchmesser aufweist, welcher im Wesentlichen dem Innendurchmesser der Verschlusskappe entspricht. Der Mitnehmer kann jedoch auch einen Aussendurchmesser aufweisen, welcher deutlich kleiner ist, als der Innendurchmesser der Verschlusskappe, so dass im Verfahren die Drehachse des Mitnehmers parallel versetzt zu einer Drehachse der Verschlusskappe angeordnet ist. In diesem Fall wird die Verschlusskappe während des Verfahrens zwischen dem Mitnehmer und der Rändelschiene gehalten.

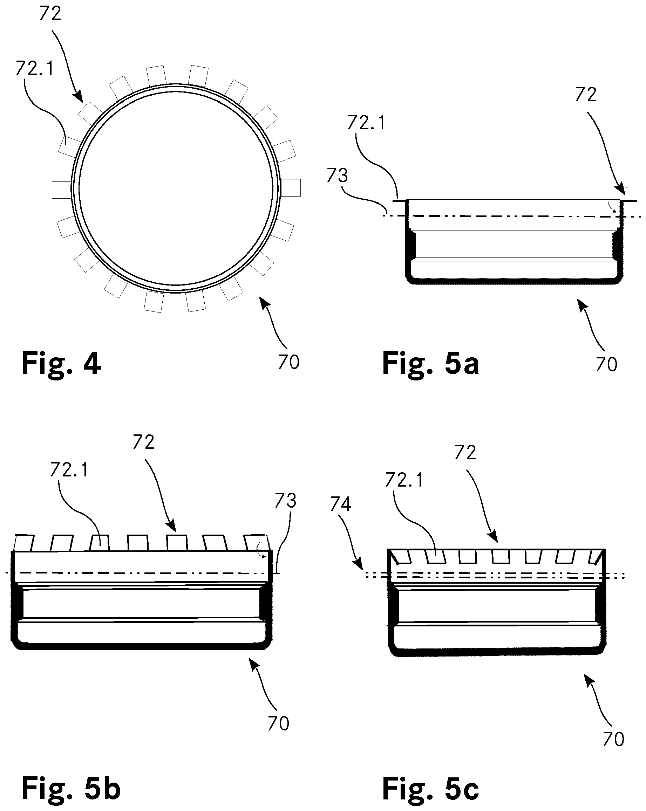

Die Figur 4 zeigt eine schematische Darstellung einer Draufsicht auf eine Verschlusskappe 70 vor dem Faltvorgang mit einem Randbereich 72, welcher radial nach aussen gerichtete Flügel 72.1 umfasst. Der Randbereich 72 besteht vorliegend aus 18 im Wesentlichen quadratisch geformten Flügeln 72.1 (zwecks Übersicht ist in der Figur 4 nur ein Flügel mit dem Bezugszeichen 72.1 versehen). Die Flügel 72.1 liegen vor dem Faltvorgang in der Transportebene. Im Herstellungsprozess wird die Verschlusskappe aus PET durch ein Tiefziehverfahren gebildet und der Randbereich 72 bestehend aus den 18 Flügeln 72.1 wird beim Ausstanzen erhalten. Dem Fachmann ist klar, dass die Flügel auch anderweitig geformt sein können. Auch der Abstand zwischen den Flügeln kann kleiner oder grösser gewählt sein.

Die Figuren 5a bis 5c zeigen schematische Darstellungen von Schnittbildern durch die Verschlusskappe 70 gemäss der Figur 4 vor respektive während aufeinanderfolgenden Stationen des Faltvorgangs.

Die Figur 5a zeigt ein Schnittbild durch die Drehachse der Verschlusskappe 70 vor dem Eintritt in den Faltvorgang. Die Flügel 72.1 des Randbereichs 72 sind, wie in der Figur 4 in der Draufsicht ersichtlich, radial nach aussen gerichtet. Weiter ist eine Schnittebene 73 als vertikale Position der Schwächungslinie dargestellt. Die Schwächungslinie wird durch einen Schnittvorgang in die Verschlusskappe 70 eingebracht. Die Schwächungslinie kann vor, während oder nach dem Faltvorgang eingebracht werden.

Die Figur 5b zeigt das Schnittbild gemäss der Figur 5a, wobei die Flügel 72.1 bereits entlang der Faltschiene nach oben und teilweise nach innen geklappt sind. Der Winkel beträgt 115°. Im weiteren Verfahren kann nun entweder mit einer Faltschiene der Winkel weiter vergrössert werden, zum Beispiel bis auf 145°. Alternativ kann nun ein Zylinder eingesetzt werden, welcher koaxial zur Verschlusskappe derart verfahren wird, dass der Zylinder die Flügel 72.1 kontaktiert und nach unten, in die Verschlusskappe 70 hinein faltet, um den Faltwinkel zu weiter zu vergrössern.

Die Figur 5c zeigt das Schnittbild gemäss der Figur 5b, wobei die Flügel 72.1 nun in der endgültigen Position, in die Verschlusskappe 70 hinein gefaltet sind. Der Faltwinkel beträgt rund 240°. In der Figur 5c ist, als alternativer Bereich zum zur Schnittebene 73 ein Schnittbereich 74 mittels Strichlinien eingezeichnet. Während bei herkömmlichen Verschlusskappen mit Schwächungslinien eine einzige Schnittebene typischerweise ausreicht, sind bei Ausführungsformen der Tethered Caps, bei welchen die Verschlusskappe nach dem Öffnen am Behälter befestigt bleiben soll, Schnitte in unterschiedlichen Ebenen rechtwinklig zur Drehachse und gegebenenfalls verbindende Schnitte ausserhalb dieser Ebenen notwendig. Damit kann eine Verschlusskappe geschaffen werden, bei welcher nach dem Öffnen das Wegverschwenl<en von der Öffnung des Behälters vereinfacht respektive ein Zurückschwenken der Verschlusskappe zur Behälteröffnung vermieden werden kann.

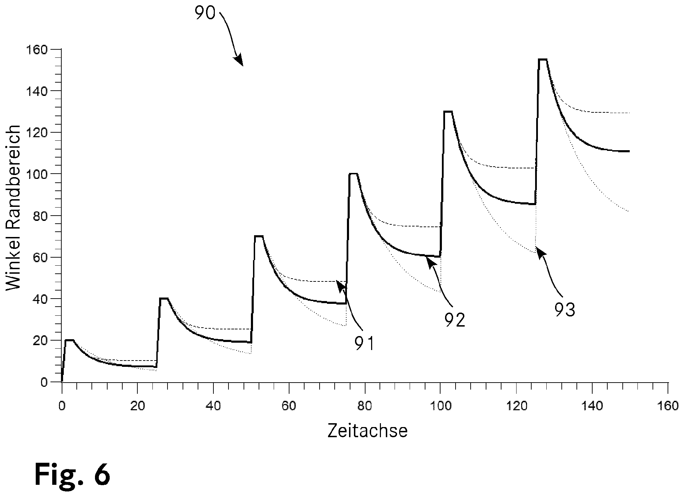

Die Figur 6 zeigt ein Diagramm 90 zur Veranschaulichung eines Faltverhaltens eines Flügels 72.1 in Abhängigkeit der Temperatur. Der Randbereich 72 respektive der Flügel 72.1 wird nur während einer kurzen Zeit über die Faltschiene geführt, danach wird er abhängig von dem Grad der Überdehnung teilweise wieder in seinen Ausgangszustand zurückfedern. je stärker die Überdehnung, umso geringer ist die Tendenz zur Rückkehr in den Ausgangszustand.

Mit zunehmender Materialtemperatur verhält sich das Material immer viskoser und weniger elastisch, der Grad der Überdehnung steigt also mit erhöhter Materialtemperatur. Der sich einstellende Endwinkel hängt somit von der Temperatur während des Verformens durch die Faltschiene ab.

Das Diagramm 90 veranschaulicht qualitativ den Winkel eines Flügels 72.1 während des Abrollvorgangs auf der Faltschiene. Die lokalen Maxima entstehen zu den Zeitpunkten, zu denen der Flügel 72.1 jeweils die Faltschiene kontaktiert. Ein jeweiliges Relaxieren geschieht, wenn durch das Weiterdrehen der Flügel den Kontakt zur Schiene wieder verliert. Das Diagramm 90 veranschaulicht auch (wieder qualitativ), wie sich unterschiedliche Temperaturen auf das gesamte Faltverhalten auswirken.

Die bevorzugte Temperatur liegt zwischen der Raumtemperatur und der Erweichungstemperatur des Kunststoffes. Gegebenenfalls kann die bevorzugte Temperatur sogar über der Erweichungstemperatur liegen, insbesondere wenn der Flügel nur kurzzeitig und lokal erhitzt wird. Vorzugsweise beträgt die Temperatur des Flügels 72.1 für PET 20C° bis 100°C, besonders bevorzugt 30° bis 80°C, weiter bevorzugt 40°C bis 70°C. Zu warme Verschlusskappen 70/Flügel 72.1 sind zu weich und führen zu Problemen beim Handling. Zu kalte Verschlusskappen 70/Flügel 72.1 stellen sich zu sehr zurück.

Eine zu schnelle Verarbeitung oder zu niedrige Temperaturen könnendas Ergebnis negativ beeinflussen. Eine zu schnelle Überdehnung kann darüber hinaus zum Bruch führen. Es hat sich als besonders vorteilhaft erwiesen, mit warmem Material zu fahren.

Bei höherer Temperatur (Kurve 91) bildet sich der Faltwinkel weniger stark zurück, als bei mittlerer Temperatur (Kurve 92) oder geringer Temperatur (Kurve 93). Dieser Effekt verstärkt sich mit zunehmendem Faltwinkel. Dies zeigt, dass der Effekt insbesondere beim letzten Faltschritt und damit für das Endergebnis des Faltvorgangs mit der Faltschiene von besonderer Relevanz ist.

Zusammenfassend ist festzustellen, dass erfindungsgemäss eine Vorrichtung und ein Verfahren zum Falten eines Randbereichs einer Verschlusskappe zur Bildung eines Sicherungsrings geschaffen werden, welche sich durch einen besonders einfachen und wartungsarmen Aufbau auszeichnet.

## Patentansprüche

1. Vorrichtung zum Falten eines Randbereichs (72) entlang einer Umfangrichtung eines Mantels einer Verschlusskappe (70) für einen Behälter, zur Ausbildung eines Sicherungsrings an der Verschlusskappe (70), umfassend:
a) eine erste Transporteinrichtung zum Transportieren der Verschlusskappe (70) entlang eines Transportweges, welcher eine Bearbeitungsstrecke umfasst, wobei
b) die erste Transporteinrichtung einen um eine Drehachse rotierbaren Mitnehmer (60) zur Aufnahme einer Verschlusskappe (70) umfasst,
**dadurch gekennzeichnet, dass**
c) entlang der Bearbeitungsstrecke eine stationäre Faltschiene (10; 50) mit einem sich entlang der Bearbeitungsstrecke verändernden Faltwinkel derart angeordnet ist, dass während eines Transportes einer Verschlusskappe (70) durch die erste Transporteinrichtung entlang der Faltschiene (10; 50) der Randbereich (72) entlang der Umfangrichtung des Mantels der Verschlusskappe (70) um eine orthogonal zur Drehachse orientierte und zur Drehachse beabstandete Faltachse in Richtung der Drehachse faltbar ist.

2. Vorrichtung nach Anspruch 1, **dadurch gekennzeichnet, dass** die Faltschiene (10; 50) einen ersten Faltschienenabschnitt (11, 12, 13; 51, 52, 53, 54) mit einer ersten Faltfläche und einen in einer Transportrichtung der Verschlusskappe (70) an den ersten Faltschienenabschnitt (11, 12, 13; 51, 52, 53, 54) angrenzenden zweiten Faltschienenabschnitt (11, 12, 13; 51, 52, 53, 54) mit einer zweiten Faltfläche umfasst, wobei die erste Faltfläche einen ersten Faltwinkel aufweist und die zweite Faltfläche einen zweiten Faltwinkel aufweist, wobei sich der erste Faltwinkel von dem zweiten Faltwinkel unterscheidet.

3. Vorrichtung nach Anspruch 2, **dadurch gekennzeichnet, dass** die Faltschiene (10; 50) weiter einen sich an den zweiten Faltschienenabschnitt (11, 12, 13; 51, 52, 53, 54) angrenzenden dritten Faltschienenabschnitt (11, 12, 13; 51, 52, 53, 54) mit einer dritten Faltfläche und einen sich an den dritten Faltschienenabschnitt (11, 12, 13; 51, 52, 53, 54) angrenzenden vierten Faltschienenabschnitt (11, 12, 13; 51, 52, 53, 54) mit einer vierten Faltfläche umfasst, wobei die dritte Faltfläche rechtwinklig zur Drehachse einen dritten Faltwinkel aufweist und die vierte Faltfläche rechtwinklig zur Drehachse einen vierten Faltwinkel aufweist.

4. Vorrichtung nach Anspruch 2 oder 3, **dadurch gekennzeichnet, dass** der erste Faltwinkel zwischen 20° und 90°, insbesondere zwischen 30° und 60°, besonders bevorzugt zwischen 40° und 50°, liegt.

5. Vorrichtung nach einem der Ansprüche 2 bis 4, **dadurch gekennzeichnet, dass** sich der Faltwinkel zwischen benachbarten Faltschienenabschnitten (11, 12, 13; 51, 52, 53, 54) in der Transportrichtung vergrössert, insbesondere um einen Winkel zwischen 5° und 30°, vorzugsweise zwischen 9° und 21°.

6. Vorrichtung nach einem der Ansprüche 2 bis 5, **dadurch gekennzeichnet, dass** ein grösster Faltwinkel zwischen 120° und 180°, insbesondere zwischen 140° und 160°, liegt.

7. Vorrichtung nach einem der Ansprüche 2 bis 6, **dadurch gekennzeichnet, dass** der erste Faltschienenabschnitt (11, 12, 13; 51, 52, 53, 54) und der zweite Faltschienenabschnitt (11, 12, 13; 51, 52, 53, 54) eine Mindestlänge aufweisen, welche einem Verschlussl<appenumfang entspricht.

8. Vorrichtung nach einem der Ansprüche 1 bis 7, **dadurch gekennzeichnet, dass** die Faltschiene (10; 50) eine Kreisbogenform aufweist.

9. Vorrichtung nach einem der Ansprüche 1 bis 8, **dadurch gekennzeichnet, dass** die Faltschiene (10; 50) beheizbar ist.

10. Vorrichtung nach einem der Ansprüche 1 bis 9, **dadurch gekennzeichnet, dass** der Mitnehmer (60) über eine entlang der Bearbeitungsstrecke stationär angeordnete Reibfläche rotierbar ist.

11. Vorrichtung nach Anspruch 10, **dadurch gekennzeichnet, dass** die Reibfläche eine Rändelung (23; 41) umfasst, welche im Betrieb der Vorrichtung mit einer Rändelung (71) einer Verschlusskappe (70) in Eingriff steht.

12. Vorrichtung nach einem der Ansprüche 2 bis 11, **dadurch gekennzeichnet, dass** sie für jeden Faltschienenabschnitt (11, 12, 13; 51, 52, 53, 54) mindestens zwei, vorzugsweise mindestens drei Transporteinrichtungen aufweist, so dass in einem Verfahren zeitgleich pro Faltschienenabschnitt (11, 12, 13; 51, 52, 53, 54) mindestens zwei, vorzugsweise mindestens drei, Verschlusskappen (70) bearbeitbar sind.

13. Verfahren zum Falten eines Randbereichs (72) entlang einer Umfangrichtung eines Mantels einer Verschlusskappe (70) für einen Behälter, zur Ausbildung eines Sicherungsrings an der Verschlusskappe (70), mit einer Vorrichtung umfassend:
a) eine erste Transporteinrichtung zum Transportieren der Verschlusskappe (70) entlang eines Transportweges, welcher eine Bearbeitungsstrecke umfasst, wobei
b) die erste Transporteinrichtung einen um eine Drehachse rotierbaren Mitnehmer (60) zur Aufnahme einer Verschlusskappe (70) umfasst,
**dadurch gekennzeichnet, dass**
die Verschlusskappe (70) entlang der Bearbeitungsstrecke einer stationären Faltschiene (10; 50) mit einem sich in einer Transportrichtung veränderndem Faltwinkel transportiert wird, so dass während des Transportes der Verschlusskappe (70) durch die erste Transporteinrichtung entlang der Faltschiene (10; 50) der Randbereich (72) entlang der Umfangrichtung des Mantels der Verschlusskappe (70) um eine orthogonal zur Drehachse orientierte und zur Drehachse beabstandete Faltachse in Richtung der Drehachse gefaltet wird.

14. Verfahren nach Anspruch 13, **dadurch gekennzeichnet, dass** das Verfahren weiter einen sich dem Transport entlang der Faltschiene anschliessenden Nachbearbeitungsschritt zum Vergrössern des Faltwinl<els umfasst, wobei insbesondere ein Zylinder koaxial zur Verschlusskappe derart verfahren wird, dass der Zylinder den Randbereich kontaktiert und nach unten, in die Verschlusskappe hinein faltet, um den Faltwinkel zu vergrössern.
